# EUROPEAN PATENT SPECIFICATION

(11) **EP 3 689 641 B1**
(45) Date of publication and mention of the grant of the patent: **02.06.2021**
(21) Application number: 19218154.3
(22) Date of filing: 19.12.2019
(51) Int. Cl.: B60C 11/03, B60C 11/04

(54) **TIRE TREAD**
REIFENLAUFFLÄCHE
BANDE DE ROULEMENT DE PNEUMATIQUE

(30) Priority: 31.01.2019 JP 2019016023
(43) Date of publication of application: 05.08.2020
(73) Proprietor: Sumitomo Rubber Industries, Ltd., Kobe-shi, Hyogo-ken 651-0072 (JP)
(72) Inventor: NAKAJIMA, Koichi, Kobe-shi, Hyogo 651-0072 (JP)
(74) Representative: Manitz Finsterwald Patent- und Rechtsanwaltspartnerschaft mbB

(56) References cited:
- EP-A2- 0 379 854
- EP-A2- 3 401 123
- AT-B- 400 424

## Description

### BACKGROUND OF THE INVENTION

### Field of the Invention

The present invention relates to a tire and specifically relates to a tire having grooves provided on a tread portion.

### Description of the Background Art

Hitherto, various tires each having grooves provided on a tread portion have been proposed. For example, in the tread portion of the pneumatic tire disclosed in Japanese Laid-Open Patent Publication No. 2016-199118, a center main groove and shoulder main grooves continuously extending in the tire circumferential direction are provided, and shoulder land portions and middle land portions demarcated by these main grooves are provided. Each middle land portion has a plurality of sipes, and each shoulder land portion has a plurality of shoulder lug grooves extending from a tread edge in the tire axial direction.

A tire in accordance with the preamble of claim 1 is known from document EP 0 379 854 A2. Related tires are known from documents EP 3 401 123 A2 and AT 400 424 B.

The pneumatic tire is expected to reduce air column resonance sound generated by the center main groove and to further have improved noise performance, by specifying the sipes provided on the middle land portions.

Generally, lateral grooves extending in the tire axial direction such as the shoulder lug grooves generate large pumping sounds, and generate large striking sounds when coming into contact with the ground, and thus tend to impair noise performance. Therefore, improvement is required for such lateral grooves.

### SUMMARY OF THE INVENTION

The present invention has been made in view of the above-described problem, and a main object of the present invention is to provide a tire capable of exhibiting excellent noise performance.

The present invention is directed to a tire comprising a tread portion, wherein at least one first groove is provided on a ground-contact surface of the tread portion, the first groove has a stepped shape in which lateral portions extending in a tire axial direction and longitudinal portions extending in a tire circumferential direction are alternately arranged in a longitudinal direction of the first groove, the number of the lateral portions included in the first groove is at least three, the lateral portions extend at an angle of 10° or less relative to the tire axial direction, the longitudinal portions extend at an angle of 10° or less relative to the tire circumferential direction, and the longitudinal portions are not connected to any main groove continuously extending in the tire circumferential direction.

In the tire according to the present invention, each of the lateral portions preferably extends parallel to the tire axial direction.

In the tire according to the present invention, each of the longitudinal portions preferably extends parallel to the tire circumferential direction.

In the tire according to the present invention, the respective lateral portions preferably have the same length in the tire axial direction.

In the tire according to the present invention, preferably, the tread portion has a plurality of main grooves continuously extending in the tire circumferential direction, and a plurality of land portions demarcated by the main grooves, the main grooves include at least one shoulder main groove adjacent to a tread edge, the land portions include a shoulder land portion demarcated between the tread edge and the shoulder main groove, and a plurality of the first grooves are provided on the shoulder land portion in the tire circumferential direction.

In the tire according to the present invention, each of the first grooves preferably extends from the tread edge and terminates before reaching the shoulder main groove.

In the tire according to the present invention, in at least one of the first grooves, a length in the tire circumferential direction of a groove reference straight line connecting both ends of the first groove is preferably smaller than a one-pitch length in the tire circumferential direction of the two first grooves adjacent to each other.

In the tire according to the present invention, preferably, the shoulder land portion includes a first shoulder land portion provided at one tread edge side, and a second shoulder land portion provided at another tread edge side, and a plurality of the first grooves are provided on each of the first shoulder land portion and the second shoulder land portion in the tire circumferential direction.

In the tire according to the present invention, preferably, in each of the first grooves provided on the first shoulder land portion, a groove reference straight line connecting both ends of the first groove is inclined in a first direction relative to the tire axial direction, and, in each of the first grooves provided on the second shoulder land portion, a groove reference straight line connecting both ends of the first groove is inclined in the first direction relative to the tire axial direction.

In the tire according to the present invention, preferably, in each of the first grooves provided on the first shoulder land portion, a groove reference straight line connecting both ends of the first groove is inclined in a first direction relative to the tire axial direction, and, in each of the first grooves provided on the second shoulder land portion, a groove reference straight line connecting both ends of the first groove is inclined in a second direction, opposite to the first direction, relative to the tire axial direction.

In the tire according to the present invention, a plurality of second grooves are preferably provided on the shoulder land portion so as to extend from the shoulder main groove in the tire axial direction and terminate within the shoulder land portion.

In the tire according to the present invention, a plurality of shallow grooves are preferably provided on the shoulder land portion so as to intersect the first grooves and have a depth of 1 mm or less.

At least one first groove is provided on the ground-contact surface of the tread portion of the tire according to the present invention. The first groove has a stepped shape in which lateral portions extending in a tire axial direction and longitudinal portions extending in a tire circumferential direction are alternately arranged in a longitudinal direction of the first groove. The number of the lateral portions included in the first groove is at least three. The lateral portions extend at an angle of 10° or less relative to the tire axial direction. The longitudinal portions extend at an angle of 10° or less relative to the tire circumferential direction. The longitudinal portions are not connected to any main groove continuously extending in the tire circumferential direction.

Generally, the entireties of the groove edges of a lateral groove extending in the tire axial direction come into contact with the ground substantially at the same time. Thus, a large striking sound tends to be generated when the groove edges come into contact with the ground. In addition, the lateral groove releases the air within the groove all at once when becoming separated from a road surface. Thus, a large pumping sound also tends to be generated.

Since the first groove has a stepped shape including at least three lateral portions, timings when the lateral portions come into contact with the ground can be sufficiently distributed, resulting in reduction of striking sounds generated when the groove edges come into contact with the ground. In addition, the respective lateral portions of the first groove can become separated from a road surface stepwise, so that the air within the groove can be gradually released. Thus, pumping sounds can be reduced.

### BRIEF DESCRIPTION OF THE DRAWINGS

FIG. 1 is a development of a tread portion of a tire according to an embodiment of the present invention;
FIG. 2 is an enlarged view of a first shoulder land portion in FIG. 1;
FIG. 3 is an enlarged view of a first groove in FIG. 2;
FIG. 4 is a development of a tread portion of a tire according to another embodiment of the present invention; and
FIG. 5 is a development of a tread portion of a tire of a comparative example.

### DESCRIPTION OF THE PREFERRED EMBODIMENTS

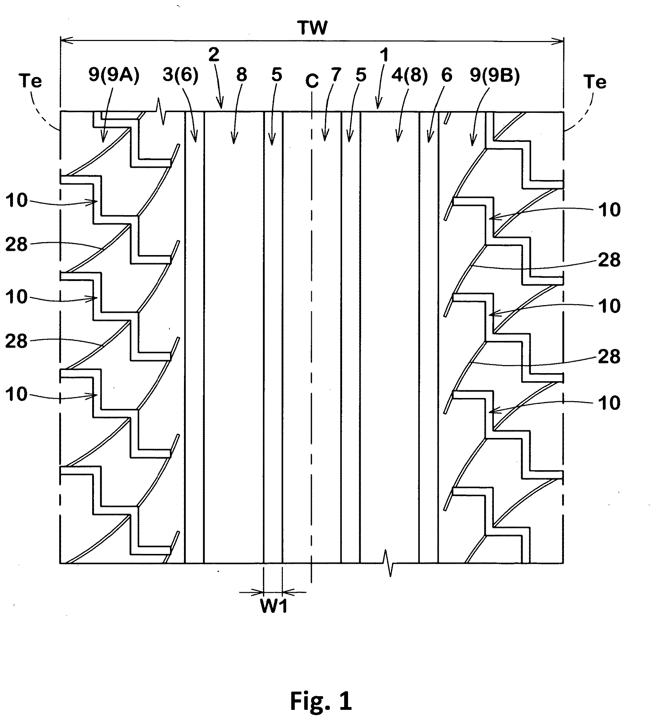

Hereinafter, an embodiment of the present invention will be described with reference to the drawings. FIG. 1 is a development of a tread portion 2 of a tire 1 according to the embodiment of the present invention. The tire 1 according to the present embodiment is suitably used, for example, as a pneumatic tire for a passenger car. However, the present invention is not limited to such an example, and may be used for a heavy-duty pneumatic tire and a non-pneumatic tire the interior of which is not filled with pressurized air.

As shown in FIG. 1, the tread portion 2 of the tire 1 according to the present embodiment has, for example, a plurality of main grooves 3 continuously extending in the tire circumferential direction between two tread edges Te, and a plurality of land portions 4 demarcated by the main grooves 3.

In the case of a pneumatic tire, each of the tread edges Te is a ground contact position at the outermost side in the tire axial direction when a normal load is applied to the tire 1 in a normal state and the tire 1 is brought into contact with a flat surface at a camber angle of 0°. The normal state refers to a state where the tire is mounted to a normal rim and inflated to a normal internal pressure and no load is applied to the tire. In the present specification, unless otherwise specified, dimensions and the like of components of the tire are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

The main grooves 3 include, for example, two crown main grooves 5 and two shoulder main grooves 6. The two crown main grooves 5 are, for example, provided with a tire equator C located therebetween. The shoulder main grooves 6 are, for example, adjacent to the tread edges Te. In the present embodiment, the shoulder main grooves 6 are provided between the crown main grooves 5 and the tread edges Te.

The groove width W1 of each main groove 3 is, for example, preferably 3.0% to 5.0% of a tread width TW. The tread width TW is the distance in the tire axial direction from one tread edge Te to the other tread edge Te in the normal state. The depth of each main groove 3 is, for example, preferably 5 to 10 mm.

The land portions 4 include, for example, a crown land portion 7, a middle land portion 8, and a shoulder land portion 9. The crown land portion 7 is, for example, demarcated between the two crown main grooves 5. The middle land portion 8 is, for example, demarcated between the crown main groove 5 and the shoulder main groove 6. The shoulder land portion 9 is, for example, demarcated between the shoulder main groove 6 and the tread edge Te. The tread portion 2 of the present embodiment has five land portions 4 demarcated by four main grooves 3. However, in another embodiment of the present invention, the tread portion 2 may have, for example, four land portions 4 demarcated by three main grooves 3.

The shoulder land portion 9 includes, for example, a first shoulder land portion 9A provided at one side in the tire axial direction, and a second shoulder land portion 9B provided at the other side in the tire axial direction.

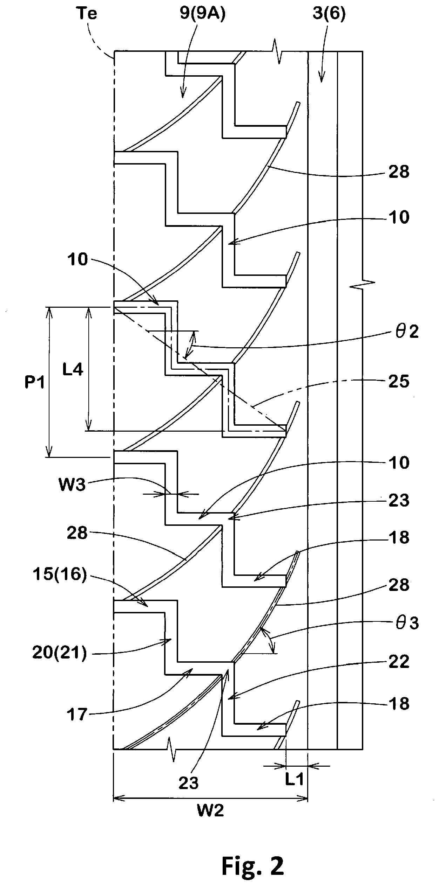

FIG. 2 shows an enlarged view of the first shoulder land portion 9A as an example of the shoulder land portion 9. As shown in FIG. 2, the width W2 in the tire axial direction of the first shoulder land portion 9A is, for example, preferably 0.20 to 0.30 times the tread width TW (shown in FIG. 1, and the same applies below).

At least one first groove 10 is provided on a ground-contact surface of the tread portion 2. In the present embodiment, a plurality of first grooves 10 are provided on each of the first shoulder land portion 9A and the second shoulder land portion 9B (shown in FIG. 1). The present invention is not limited to such an example, and first grooves 10 may be provided on another land portion. The groove width W3 of each of the first grooves 10 is, for example, 0.30 to 0.50 times the groove width W1 (shown in FIG. 1) of each of the main grooves 3.

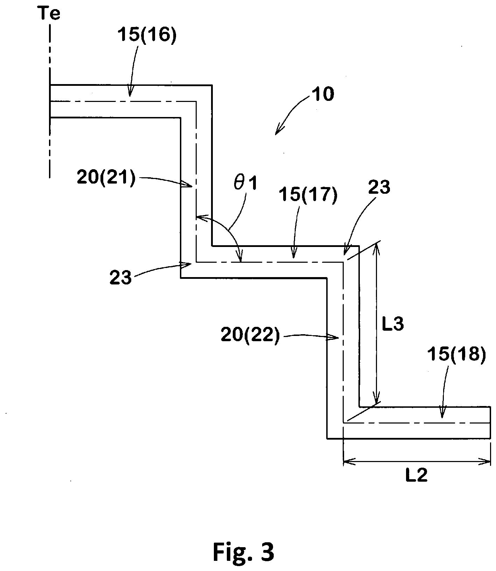

FIG. 3 shows an enlarged view of the first groove 10. As shown in FIG. 3, the first groove 10 has a stepped shape in which lateral portions 15 extending in the tire axial direction and longitudinal portions 20 extending in the tire circumferential direction are alternately arranged in the longitudinal direction of the first groove 10. In addition, the first groove 10 includes at least three lateral portions 15. More specifically, each first groove 10 of the present embodiment includes three lateral portions 15 and two longitudinal portions 20.

In the present invention, the lateral portions 15 extend at an angle of 10° or less relative to the tire axial direction. The longitudinal portions 20 extend at an angle of 10° or less relative to the tire circumferential direction. The longitudinal portions 20 are not connected to any main groove continuously extending in the tire circumferential direction.

Generally, the entireties of the groove edges of a lateral groove extending in the tire axial direction come into contact with the ground substantially at the same time. Thus, a large striking sound tends to be generated when the groove edges come into contact with the ground. In addition, the lateral groove releases the air within the groove all at once when becoming separated from a road surface. Thus, a large pumping sound also tends to be generated.

Since the first groove 10 of the present invention has a stepped shape including at least three lateral portions 15, timings when the lateral portions 15 come into contact with the ground can be sufficiently distributed, resulting in reduction of striking sounds generated when the groove edges come into contact with the ground. In addition, the respective lateral portions 15 of the first groove 10 can become separated from a road surface stepwise, so that the air within the groove can be gradually released. Thus, pumping sounds can be reduced. Accordingly, excellent noise performance is achieved.

Moreover, since the lateral portions 15 are displaced relative to each other in the tire circumferential direction, even when the edges of one lateral portion 15 slip, the edges of the other lateral portions 15 grip, and thus uneven wear (particularly, heel-and-toe wear) is inhibited from occurring in the lateral portion 15. Furthermore, slipping sounds of the edges of the lateral portions 15 are also distributed, so that excellent noise performance is achieved.

Each first groove 10 of the present embodiment includes, for example, a first lateral portion 16, a second lateral portion 17, a third lateral portion 18, a first longitudinal portion 21, and a second longitudinal portion 22. For example, the first lateral portion 16 extends from the tread edge Te in the tire axial direction. The second lateral portion 17 is provided inward of the first lateral portion 16 in the tire axial direction. The third lateral portion 18 is provided inward of the second lateral portion 17 in the tire axial direction. The first longitudinal portion 21 is provided between the first lateral portion 16 and the second lateral portion 17. The second longitudinal portion 22 is provided between the second lateral portion 17 and the third lateral portion 18.

As shown in FIG. 2, for example, the first groove 10 extends from the tread edge Te and terminates before reaching the shoulder main groove 6. The distance L1 in the tire axial direction from the terminal end of the first groove 10 to the shoulder main groove 6 is, for example, preferably 0.05 to 0.15 times the width W2 in the tire axial direction of the shoulder land portion 9. Such a first groove 10 exhibits excellent drainage performance while maintaining the stiffness of the shoulder land portion 9, and serves to enhance steering stability and wet performance in a well-balanced manner. In addition, in the present embodiment, since the first groove 10 terminates, air column resonance sound generated by the shoulder main groove 6 is not excited by noise generated by the first groove 10, so that excellent noise performance is achieved.

The angle of each lateral portion 15 relative to the tire axial direction is preferably not greater than 5°. In a further preferable mode, the angle of each lateral portion 15 of the present embodiment relative to the tire axial direction is 0°. That is, each lateral portion 15 preferably extends parallel to the tire axial direction. In each first groove 10 of the present embodiment, each lateral portion 15 extends parallel to the tire axial direction. Such a mode is preferable since each lateral portion 15 has fewer components extending obliquely and thus the level of steering sound generated during turning is the same between left turning and right turning.

As shown in FIG. 3, the length L2 in the tire axial direction of each lateral portion 15 is, for example, preferably, 0.20 to 0.30 times the width W2 in the tire axial direction (shown in FIG. 2) of the shoulder land portion 9. The length of each portion of the first groove 10 described in the present specification is a value measured on the groove center line. In the present embodiment, the respective lateral portions 15 have the same length in the tire axial direction. Accordingly, uneven wear of the shoulder land portion 9 is inhibited.

The angle of each longitudinal portion 20 relative to the tire circumferential direction is preferably not greater than 5°. In a further preferable mode, the angle of each longitudinal portion 20 of the present embodiment relative to the tire circumferential direction is 0°. That is, each longitudinal portion 20 preferably extends parallel to the tire circumferential direction. In each first groove 10 of the present embodiment, each longitudinal portion 20 extends parallel to the tire circumferential direction. Such longitudinal portions 20 sufficiently distribute the timings when the respective lateral portions 15 come into contact with the ground, and also can provide frictional force in the tire axial direction during running on a wet road. Furthermore, the difference in steering sound between left turning and right turning is also decreased.

The length L3 in the tire axial direction of each longitudinal portion 20 is, for example, preferably 0.95 to 1.20 times the length L2 of each lateral portion 15. In the present embodiment, the respective longitudinal portions 20 have the same length in the tire circumferential direction. Accordingly, uneven wear of the shoulder land portion 9 is inhibited.

An angle θ1 of each of corner portions 23 formed by the lateral portions 15 and the longitudinal portions 20 is, for example, preferably 80 to 100°, and is 90° in the present embodiment. Accordingly, uneven wear around each corner portion 23 is inhibited.

As shown in FIG. 2, in at least one of the first grooves 10, the length L4 in the tire circumferential direction of a groove reference straight line 25 connecting both ends of the first groove 10 is preferably smaller than a one-pitch length P1 in the tire circumferential direction between two first grooves 10 adjacent to each other. Specifically, the length L4 is 0.70 to 0.90 times the one-pitch length P1. In a more preferable mode, in the present embodiment, each first groove 10 has the above structure. Accordingly, an increase in maximum sound pressure caused by overlapping of noise generated by the first grooves 10 adjacent to each other in the tire circumferential direction can be prevented.

In each of the first grooves 10 provided on the first shoulder land portion 9A, for example, a groove reference straight line 25 is inclined in a first direction (downward toward the right side in FIG. 2) relative to the tire axial direction. Moreover, in the present embodiment, as shown in FIG. 1, in each of the first grooves 10 provided on the second shoulder land portion 9B as well, a groove reference straight line 25 is inclined in the first direction. The arrangement of such first grooves 10 is suitably used for a tire having a non-directional pattern with which the rotation direction of the tire is not specified, since noise performance and wet performance do not depend on the rotation direction of the tire.

As shown in FIG. 2, an angle θ2 of the groove reference straight line 25 relative to the tire axial direction is, for example, preferably 25 to 45°. Such a first groove 10 exhibits excellent noise performance, and also can provide frictional force in the tire circumferential direction and the tire axial direction in a well-balanced manner during running on a wet road surface.

In another embodiment of the present invention, in each of the first grooves 10 provided on the first shoulder land portion 9A, the groove reference straight line 25 may be inclined in the first direction relative to the tire axial direction, and, in each of the first grooves 10 provided on the second shoulder land portion 9B, the groove reference straight line 25 may be inclined in a second direction, opposite to the first direction, relative to the tire axial direction. The arrangement of such first grooves 10 is suitably used, for example, for a tire having a directional pattern with which the rotation direction of the tire is specified.

The shoulder land portion 9 of the present embodiment has, for example, a plurality of shallow grooves 28 each having a depth of 1 mm or less. The groove width of each shallow groove 28 is, for example, not greater than 2 mm. For example, each shallow groove 28 preferably intersects the first groove 10. Such shallow grooves 28 appropriately reduce the stiffness of the shoulder land portion 9, and can reduce striking sounds generated when a tread surface of the shoulder land portion 9 comes into contact with the ground.

Each shallow groove 28 is, for example, preferably inclined in the second direction opposite to the first direction. An angle θ3 of each shallow groove 28 relative to the tire axial direction is, for example, 20 to 70°. In addition, for example, the angle θ3 of each shallow groove 28 relative to the tire axial direction gradually increases toward the inner side in the tire axial direction.

For example, each shallow groove 28 of the present embodiment extends from the first lateral portion 16 of one first groove 10 so as to be inclined in the second direction. In addition, the shallow groove 28 crosses the corner portion 23 formed by the second lateral portion 17 and the second longitudinal portion 22 of the first groove 10 that are adjacent to one side in the tire circumferential direction (the upper side in FIG. 1) of the first lateral portion 16. Moreover, the shallow groove 28 extends from the corner portion 23 so as to be inclined in the second direction, crosses the third lateral portion 18 of the first groove 10 adjacent to the one side in the tire circumferential direction, and terminates within the shoulder land portion 9.

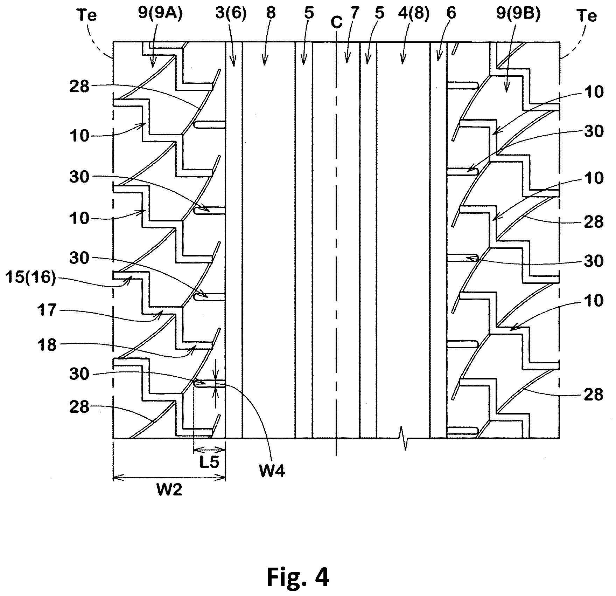

FIG. 4 shows a development of a tread portion 2 of a tire 1 according to another embodiment of the present invention. In FIG. 4, the elements common to the above-described embodiment are designated by the same reference characters, and the description thereof is omitted here.

In addition to the first grooves 10 and the shallow grooves 28, a plurality of second grooves 30 are provided on each shoulder land portion 9 of the embodiment shown in FIG. 4 so as to extend from each shoulder main groove 6 in the tire axial direction and terminate within the shoulder land portion 9. Such second grooves 30 appropriately reduce the stiffness around the third lateral portions 18 of the first grooves 10. Thus, striking sounds and pumping sounds generated by the third lateral portions 18 and striking sounds and pumping sounds generated by the first lateral portions 16 or the second lateral portions 17 are made to become white noise, and noise performance is enhanced.

Each second groove 30 is provided, for example, at an angle of preferably 10° or less and more preferably 5° or less relative to the tire axial direction. In a further preferable mode, each second groove 30 of the embodiment extends at an angle of 0° relative to the tire axial direction, that is, extends parallel to the tire axial direction. Such second grooves 30 serve to increase traction during running on a wet road surface.

For example, each second groove 30 preferably overlaps a region obtained by extending the third lateral portion 18 in the tire circumferential direction. In addition, each second groove 30 terminates at the inner side in the tire axial direction with respect to the second longitudinal portion 22. Such second grooves 30 enhance noise performance and wet performance in a well-balanced manner.

The length L5 of each second groove 30 is, for example, preferably 0.25 to 0.45 times the width W2 in the tire axial direction of the shoulder land portion 9.

The groove width W4 of each second groove 30 is, for example, smaller than the groove width of each shoulder main groove 6, and is smaller than the groove width of each first groove 10 in this embodiment. In addition, the groove width W4 of each second groove 30 is preferably larger than the groove width of each shallow groove 28. Specifically, the groove width W4 of each second groove 30 is 0.20 to 0.35 times of the groove width of each shoulder main groove 6. Such second grooves 30 can enhance wet performance and noise performance while maintaining steering stability.

Although the tires according to the embodiments of the present invention have been described in detail above, various modifications can be made as claimed.

### EXAMPLES

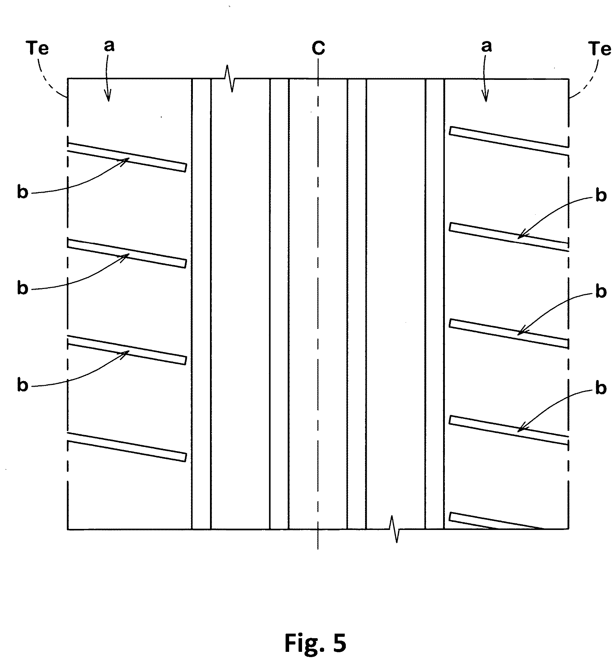

A tire with a size of 195/65R15 having the basic pattern in FIG. 1 was produced as a test tire. As a comparative example, a tire having the pattern shown in FIG. 5 was produced as a test tire. A plurality of shoulder lateral grooves b extending so as to be inclined at an angle of 10° relative to the tire axial direction are provided on each of shoulder land portions a of the tire of the comparative example. The width of each land portion of the tire of the comparative example is the same as that shown in FIG. 1. Each test tire was tested for noise performance. The common specifications and the test method for all the test tires are as follows.
Mount rim: 16×6.5J
Tire internal pressure: 240 kPa

### <Noise Performance>

The noise generated when each test tire was run on a drum tester under the following conditions was measured at an overall level. The results are indicated as the magnitude (dB) of the sound pressure level of the embodiment with respect to the comparative example.
Vertical load: 4.68 kN
Speed: 40 to 100 km/h
Microphone position: position away from tire equator in width direction by 1.00 m

The results are shown in Table 1.

**[Table 1]**

| | 40 km/h | 60 km/h | 80 km/h | 100 km/h |
|---|---|---|---|---|
| Noise performance (magnitude of sound pressure level of embodiment with respect to comparative example) | -2.7 db | -3.3 db | -4.0 db | -1.5 db |

As a result of the test, as shown in Table 1, it was confirmed that the tire of the example exhibits excellent noise performance in each speed range.

## Claims

1. A tire (1) comprising a tread portion (2), wherein
at least one first groove (10) is provided on a ground-contact surface of the tread portion (2),
the first groove (10) has a stepped shape in which lateral portions (15) extending in a tire axial direction and longitudinal portions (20) extending in a tire circumferential direction are alternately arranged in a longitudinal direction of the first groove (10),
the number of the lateral portions (15) included in the first groove (10) is at least three, and
the longitudinal portions (20) are not connected to any main groove continuously extending in the tire circumferential direction,
**characterized in that**
the lateral portions (15) extend at an angle of 10° or less relative to the tire axial direction, and
the longitudinal portions (20) extend at an angle of 10° or less relative to the tire circumferential direction.

2. The tire (1) according to claim 1, wherein each of the lateral portions (15) extends parallel to the tire axial direction.

3. The tire (1) according to claim 1 or 2, wherein each of the longitudinal portions (20) extends parallel to the tire circumferential direction.

4. The tire (1) according to any one of claims 1 to 3, wherein the respective lateral portions (15) have the same length in the tire axial direction.

5. The tire (1) according to any one of claims 1 to 4, wherein
the tread portion (2) has a plurality of main grooves (3) continuously extending in the tire circumferential direction, and a plurality of land portions (4) demarcated by the main grooves (3),
the main grooves (3) include at least one shoulder main groove (6) adjacent to a tread edge (Te),
the land portions (4) include a shoulder land portion (9) demarcated between the tread edge (Te) and the shoulder main groove (6), and
a plurality of the first grooves (10) are provided on the shoulder land portion (9) in the tire circumferential direction.

6. The tire (1) according to claim 5, wherein each of the first grooves (10) extends from the tread edge (Te) and terminates before reaching the shoulder main groove (6).

7. The tire (1) according to claim 5 or 6, wherein, in at least one of the first grooves (10), a length (L4) in the tire circumferential direction of a groove reference straight line (25) connecting both ends of the first groove (10) is smaller than a one-pitch length (P1) in the tire circumferential direction of the two first grooves (10) adjacent to each other.

8. The tire (1) according to any one of claims 5 to 7, wherein
the shoulder land portion (9) includes a first shoulder land portion (9A) provided at one tread edge (Te) side, and a second shoulder land portion (9B) provided at another tread edge (Te) side, and
a plurality of the first grooves (10) are provided on each of the first shoulder land portion (9A) and the second shoulder land portion (9B) in the tire circumferential direction.

9. The tire (1) according to claim 8, wherein
in each of the first grooves (10) provided on the first shoulder land portion (9A), a groove reference straight line (25) connecting both ends of the first groove (10) is inclined in a first direction relative to the tire axial direction, and
in each of the first grooves (10) provided on the second shoulder land portion (9B), a groove reference straight line (25) connecting both ends of the first groove (10) is inclined in the first direction relative to the tire axial direction.

10. The tire (1) according to claim 8, wherein
in each of the first grooves (10) provided on the first shoulder land portion (9A), a groove reference straight line (25) connecting both ends of the first groove (10) is inclined in a first direction relative to the tire axial direction, and
in each of the first grooves (10) provided on the second shoulder land portion (9B), a groove reference straight line (25) connecting both ends of the first groove (10) is inclined in a second direction, opposite to the first direction, relative to the tire axial direction.

11. The tire (1) according to any one of claims 5 to 10, wherein a plurality of second grooves (30) are provided on the shoulder land portion (9) so as to extend from the shoulder main groove (6) in the tire axial direction and terminate within the shoulder land portion (9).

12. The tire (1) according to any one of claims 5 to 11, wherein a plurality of shallow grooves (28) are provided on the shoulder land portion (9) so as to intersect the first grooves (10) and have a depth of 1 mm or less.

## Patentansprüche

1. Reifen (1), der einen Laufflächenabschnitt (2) umfasst, wobei
mindestens eine erste Rille (10) an einer Bodenkontaktfläche des Laufflächenabschnitts (2) vorgesehen ist,
die erste Rille (10) eine gestufte Form aufweist, bei der Querabschnitte (15), die sich in einer Reifenaxialrichtung erstrecken, und Längsabschnitte (20), die sich in einer Reifenumfangsrichtung erstrecken, abwechselnd in einer Längsrichtung der ersten Rille (10) angeordnet sind,
die Anzahl der Querabschnitte (15), die in der ersten Rille (10) enthalten sind, mindestens drei beträgt, und
die Längsabschnitte (20) nicht mit einer Hauptrille, die sich kontinuierlich in Reifenumfangsrichtung erstreckt, verbunden sind,
**dadurch gekennzeichnet, dass**
die Querabschnitte (15) sich unter einem Winkel von 10° oder weniger relativ zur Reifenachsrichtung erstrecken, und
die Längsabschnitte (20) sich unter einem Winkel von 10° oder weniger relativ zur Reifenumfangsrichtung erstrecken.

2. Reifen (1) nach Anspruch 1, wobei sich jeder der Querabschnitte (15) parallel zur Reifenaxialrichtung erstreckt.

3. Reifen (1) nach Anspruch 1 oder 2, wobei sich jeder der Längsabschnitte (20) parallel zur Reifenumfangsrichtung erstreckt.

4. Reifen (1) nach einem der Ansprüche 1 bis 3, wobei die jeweiligen Querabschnitte (15) in der Reifenaxialrichtung die gleiche Länge aufweisen.

5. Reifen (1) nach einem der Ansprüche 1 bis 4, wobei
der Laufflächenabschnitt (2) mehrere Hauptrillen (3), die sich kontinuierlich in der Reifenumfangsrichtung erstrecken, und mehrere Landabschnitte (4) aufweist, die durch die Hauptrillen (3) abgegrenzt sind,
die Hauptrillen (3) mindestens eine Schulterhauptrille (6) benachbart zu einer Laufflächenkante (Te) umfassen,
die Landabschnitte (4) einen Schulterlandabschnitt (9) umfassen, der zwischen der Laufflächenkante (Te) und der Schulterhauptrille (6) abgegrenzt ist, und
mehrere der ersten Rillen (10) an dem Schulterlandabschnitt (9) in der Reifenumfangsrichtung vorgesehen sind.

6. Reifen (1) nach Anspruch 5, wobei sich jede der ersten Rillen (10) von der Laufflächenkante (Te) erstreckt und vor Erreichen der Schulterhauptrille (6) endet.

7. Reifen (1) nach Anspruch 5 oder 6, wobei
in mindestens einer der ersten Rillen (10) eine Länge (L4) in der Reifenumfangsrichtung einer Rillenbezugsgeraden (25), die beide Enden der ersten Rille (10) verbindet, kleiner ist als eine Länge eines Teilungsabstandes (P1) in der Reifenumfangsrichtung der beiden einander benachbarten ersten Rillen (10).

8. Reifen (1) nach einem der Ansprüche 5 bis 7, wobei
der Schulterlandabschnitt (9) einen ersten Schulterlandabschnitt (9A), der auf einer Seite der einen Laufflächenkante (Te) vorgesehen ist, und einen zweiten Schulterlandabschnitt (9B), der auf einer Seite der anderen Laufflächenkante (Te) vorgesehen ist, umfasst, und
mehrere der ersten Rillen (10) an einem jeden des ersten Schulterlandabschnitts (9A) und des zweiten Schulterlandabschnitts (9B) in der Reifenumfangsrichtung vorgesehen sind.

9. Reifen (1) nach Anspruch 8, wobei
in jeder der ersten Rillen (10), die an dem ersten Schulterlandabschnitt (9A) vorgesehen sind, eine Rillenbezugsgerade (25), die beide Enden der ersten Rille (10) verbindet, in einer ersten Richtung relativ zur Reifenaxialrichtung geneigt ist, und
in jeder der ersten Rillen (10), die an dem zweiten Schulterlandabschnitt (9B) vorgesehen sind, eine Rillenbezugsgerade (25), die beide Enden der ersten Rille (10) verbindet, in der ersten Richtung relativ zur Reifenachsrichtung geneigt ist.

10. Reifen (1) nach Anspruch 8, wobei
in jeder der ersten Rillen (10), die an dem ersten Schulterlandabschnitt (9A) vorgesehen sind, eine Rillenbezugsgerade (25), die beide Enden der ersten Rille (10) verbindet, in einer ersten Richtung relativ zur Reifenaxialrichtung geneigt ist, und
in jeder der ersten Rillen (10), die an dem zweiten Schulterlandabschnitt (9B) vorgesehen sind, eine Rillenbezugsgerade (25), die beide Enden der ersten Rille (10) verbindet, in einer zweiten Richtung relativ zur Reifenaxialrichtung geneigt ist, die der ersten Richtung entgegengesetzt ist.

11. Reifen (1) nach einem der Ansprüche 5 bis 10, wobei mehrere zweite Rillen (30) an dem Schulterlandabschnitt (9) so vorgesehen sind, dass sie sich von der Schulterhauptrille (6) in der Reifenaxialrichtung erstrecken und innerhalb des Schulterlandabschnitts (9) enden.

12. Reifen (1) nach einem der Ansprüche 5 bis 11, wobei mehrere flache Rillen (28) an dem Schulterlandabschnitt (9) so vorgesehen sind, dass sie die ersten Rillen (10) schneiden und eine Tiefe von 1 mm oder weniger aufweisen.

## Revendications

1. Pneumatique (1) comprenant une portion formant bande de roulement (2), dans lequel
au moins une première rainure (10) est prévue sur une surface de contact au sol de la portion formant bande de roulement (2),
la première rainure (10) a une forme étagée dans laquelle des portions latérales (15) s'étendant dans une direction axiale du pneumatique et des portions longitudinales (20) s'étendant dans une direction circonférentielle du pneumatique sont agencées en alternance dans une direction longitudinale de la première rainure (10),
le nombre de portions latérales (15) incluses dans la première rainure (10) est au moins de trois, et
les portions longitudinales (20) ne sont connectées à aucune rainure principale s'étendant en continu dans la direction circonférentielle du pneumatique,
**caractérisé en ce que**
les portions latérales (15) s'étendent sous un angle de 10° ou moins relativement à la direction axiale du pneumatique, et
les portions longitudinales (20) s'étendent sous un angle de 10° ou moins relativement à la direction circonférentielle du pneumatique.

2. Pneumatique (1) selon la revendication 1, dans lequel chacune des portions latérales (15) s'étend parallèlement à la direction axiale du pneumatique.

3. Pneumatique (1) selon la revendication 1 ou 2, dans lequel chacune des portions longitudinales (20) étant parallèlement à la direction circonférentielle du pneumatique.

4. Pneumatique (1) selon l'une quelconque des revendications 1 à 3, dans lequel les portions latérales (15) respectives ont la même longueur dans la direction axiale du pneumatique.

5. Pneumatique (1) selon l'une quelconque des revendications 1 à 4, dans lequel
la portion formant bande de roulement (2) a une pluralité de rainures principales (3) s'étendant en continu dans la direction circonférentielle du pneumatique, et une pluralité de portions en relief (4) délimitées par les rainures principales (3),
les rainures principales (3) incluent au moins une rainure principale d'épaulement (6) adjacentes à un bord de bande de roulement (Te),
les portions en relief (4) incluent une portion en relief d'épaulement (9) délimitée entre le bord de bande de roulement (Te) et la rainure principale d'épaulement (6), et
une pluralité des premières rainures (10) sont prévues sur la portion en relief d'épaulement (9) dans la direction circonférentielle du pneumatique.

6. Pneumatique (1) selon la revendication 5, dans lequel chacune des premières rainures (10) s'étend depuis le bord de bande de roulement (Te) et se termine avant d'atteindre la rainure principale d'épaulement (6).

7. Pneumatique (1) selon la revendication 5 ou 6, dans lequel, dans au moins une des premières rainures (10), une longueur (L4) dans la direction circonférentielle du pneumatique d'une ligne droite de référence de rainure (25) connectant les deux extrémités de la première rainure (10) est plus petite qu'une longueur d'un pas (P1) dans la direction circonférentielle du pneumatique des deux premières rainures (10) adjacentes l'une à l'autre.

8. Pneumatique (1) selon l'une quelconque des revendications 5 à 7, dans lequel
la portion en relief d'épaulement (9) inclut une première portion en relief d'épaulement (9A) prévue au niveau d'un côté du bord de bande de roulement (Te), et une seconde portion en relief d'épaulement (9B) prévue au niveau de l'autre côté du bord de bande de roulement (Te), et
une pluralité des premières rainures (10) sont prévues sur chaque portion parmi la première portion en relief d'épaulement (9A) et la seconde portion en relief d'épaulement (9B) dans la direction circonférentielle du pneumatique.

9. Pneumatique (1) selon la revendication 8, dans lequel
dans chacune des premières rainures (10) prévues sur la première portion en relief d'épaulement (9A), une ligne droite de référence de rainure (25) connectant les deux extrémités de la première rainure (10) est inclinée dans une première direction relativement à la direction axiale du pneumatique, et
dans chacune des premières rainures (10) prévues sur la seconde portion en relief d'épaulement (9B), une ligne droite de référence de rainure (25) connectant les deux extrémités de la première rainure (10) est inclinée dans la première direction relativement à la direction axiale du pneumatique.

10. Pneumatique (1) selon la revendication 8, dans lequel
dans chacune des premières rainures (10) prévues sur la première portion en relief d'épaulement (9A), une ligne droite de référence de rainure (25) connectant les deux extrémités de la première rainure (10) est inclinée dans une première direction relativement à la direction axiale du pneumatique, et
dans chacune des premières rainures (10) prévues sur la seconde portion en relief d'épaulement (9B), une ligne droite de référence de rainure (25) connectant les deux extrémités de la première rainure (10) est inclinée dans une seconde direction, opposée à la première direction, relativement à la direction axiale du pneumatique.

11. Pneumatique (1) selon l'une quelconque des revendications 5 à 10,
dans lequel une pluralité de secondes rainures (30) sont prévues sur la portion en relief d'épaulement (9) de manière à s'étendre depuis la rainure principale d'épaulement (6) dans la direction axiale du pneumatique et à se terminer à l'intérieur de la portion en relief d'épaulement (9).

12. Pneumatique (1) selon l'une quelconque des revendications 5 à 11,
dans lequel une pluralité de rainures peu profondes (28) sont prévues sur la portion en relief d'épaulement (9) de manière à recouper les premières rainures (10) et à avoir une profondeur de 1 mm ou moins.
